(19) Europäisches Patentamt
European Patent Office
Office européen des brevets

(11) **EP 3 628 515 A1**

(12) **EUROPEAN PATENT APPLICATION**

(43) Date of publication:
**01.04.2020 Bulletin 2020/14**

(51) Int Cl.:
***B60H 1/00*** *(2006.01)*  ***G08G 1/0967*** *(2006.01)*

(21) Application number: **18197003.9**

(22) Date of filing: **26.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Valeo Systemes Thermiques-THS
78322 Le Mesnil Saint Denis Cedex (FR)**

(72) Inventors:
• **DE PELSEMAEKER, Georges
78322 LE MESNIL SAINT DENIS CEDEX (FR)**
• **CLEMARON, Laetitia
78322 LE MESNIL SAINT-DENIS CEDEX (FR)**
• **DEVEYCX, Marion
78322 LE MESNIL SAINT-DENIS (FR)**

(74) Representative: **Metz, Gaëlle
Valeo Systèmes Thermiques
8, rue Louis Lormand
CS 80517 La Verrière
78322 Le Mesnil Saint Denis Cedex (FR)**

(54) **A SYSTEM FOR CONTROLLING AIR QUALITY INSIDE A VEHICLE CABIN**

(57) A system (100) for controlling air quality inside a vehicle cabin includes a navigation module (10), an outside air pollution module (20), a detection module (30), a storage memory (40), a processing module (50) and a control module (60). The processing module (50) receives inputs from at least one of navigation module (10), outside air pollution module (20), detection module (30) and storage memory (40) to determine at least one of air quality parameter inside vehicle cabin at any location along selected route and at any time, at least one threshold limit for air quality inside vehicle under different conditions, the time required to reach the at least one threshold limit, locations along selected routes where outside air quality is within a predetermined permissible limit and time for reaching the locations to generate a control signal for controlling operation of a re-circulation flap (70) and defining ratio of time of operation of the re-circulation flap in re-circulation mode and to fresh air mode.

FIG. 1

**Description**

The present invention relates to an automatic system for improving air quality inside the vehicle cabin.

A re-circulation flap of a conventional vehicle air conditioning system operates either in a fresh air mode or a re-circulate mode. In the re-circulate mode, the already cooled air inside a vehicle cabin is re-circulated back to an evaporator of the conventional vehicle air conditioning system. The re-circulated air is the air that had at least once been cooled by the evaporator or that had at least once been breathed in and out by the vehicle's occupants. As in the re-circulate mode the evaporator cools the already cooled air, the inside of the vehicle cabin can reach the desired temperature quickly. However, in case the re-circulation flap operates in re-circulate mode for too long duration, the air inside the vehicle cabin becomes deprived of oxygen and laden or sometimes saturated with moisture due to respiration by the vehicle occupants. As a result the air inside the vehicle cabin no longer remains suitable for the vehicle occupants and may cause health issues to the vehicle occupants. More specifically, such poor air quality inside the vehicle cabin causes asphyxiation as a result the driver gets quickly tired and concentration and safe driving ability of the driver are also adversely impacted. Further, such poor air quality inside the vehicle cabin, particularly inside air laden or in some extreme cases saturated with moisture may also cause windshield misting that in turn cause poor visibility and accidents. In the fresh air mode, the vehicle air conditioning system pulls in air from outside the vehicle cabin and the evaporator cools the air received from outside the vehicle cabin. However, in the fresh air mode, the air conditioning system requires more time for reaching the desired temperature inside the vehicle cabin and also consumes comparatively more power as compared to when operating in re-circulation mode.

With increase in automation in automobiles, few prior arts suggest automatic systems with sensors that monitor in-cabin air quality, particularly, moisture, carbon-di-oxide and oxygen levels inside the vehicle cabin for facilitating automatic switching between the re-circulate mode and the fresh air mode. However, such conventional automatic systems need to be improved regarding comfort conditions, air conditioning consumption and air quality inside the vehicle cabin.

Accordingly, there is a need for a system, particularly an automatic system for controlling air quality inside a vehicle cabin that automatically switches operation of a re-circulation flap of a vehicle air conditioning system between the fresh air mode and the re-circulate mode without compromising on efficiency and performance of the vehicle air conditioning system and air quality and comfort conditions inside the vehicle cabin. Further, there is a need for an automatic system for controlling air quality inside a vehicle cabin that performs numerous checks before switching modes and ensuring both improved air quality and comfort conditions inside the vehicle cabin. Further, there is a need for an automatic system for controlling air quality inside a vehicle cabin that is safe, efficient, accurate and reliable. Further, there is a need for a system for controlling air quality inside a vehicle cabin that can be easily retrofitted in current vehicles without requiring many modifications.

An object of the present invention is to provide a system for controlling air quality inside a vehicle cabin that obviates the drawbacks associated conventional automatic systems and in which switching between fresh mode and re-circulate mode is based on air quality inside the vehicle cabin and outside the vehicle cabin.

Another object of the present invention is to provide a system for controlling air quality inside a vehicle cabin that switches operation of a re-circulation flap of a vehicle air conditioning system between a fresh air mode and a re-circulate mode without compromising on efficiency and performance of the vehicle air conditioning system.

Still another object of the present invention is to provide a system for controlling air quality inside a vehicle cabin that prevents polluted air outside the vehicle cabin from entering inside the vehicle cabin and harming delicate sub-systems disposed inside the vehicle cabin, thereby extending service life of the filter or delicate sub-systems and maintaining dust free environment in the vehicle.

Yet another object of the present invention is to provide a system for controlling air quality inside a vehicle cabin that performs numerous checks before switching between fresh air mode and re-circulate mode for ensuring improved air quality, air conditioning consumption and comfort and safety conditions inside the vehicle cabin.

Still another object of the present invention is to provide a system for controlling air quality inside a vehicle cabin that not only limits $CO_2$ levels inside the vehicle cabin to prevent asphyxiation but also limits humidity levels inside the vehicle cabin to prevent misting of the windscreen.

Another object of the present invention is to provide a system for controlling air quality inside a vehicle cabin that is efficient, accurate and reliable.

Yet another object of the present invention is to provide a system for controlling air quality inside a vehicle cabin that can be easily retrofitted in current vehicles without requiring many modifications.

Another object of the present invention is to provide a system for controlling air quality inside a vehicle cabin that is automatic and as such eliminates human intervention for controlling air quality inside the vehicle.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A system for controlling air quality inside a vehicle cabin is disclosed in accordance with an embodiment of the present invention. The system includes a navigation module, at least one outside air pollution module, at least one detection module, at least one storage memory, a processing module and a control module. The navigation module facilitates in selection of a destination and a route for reaching the destination. The at least one outside air pollution module determines air quality outside the vehicle cabin. The at least one detection module detects at least one parameter impacting air quality inside the vehicle cabin. The processing module receives inputs from at least one of the navigation module, the at least one outside air pollution module, the at least one detection module and the at least one storage memory to determine air quality parameter inside the vehicle cabin at any location along the selected route and at any time, the processing module calculates, taken into account at least one threshold limit for the air quality inside the vehicle under different conditions, the time required to reach the at least one threshold limit, the processing module further determines locations along the selected routes where outside air quality is within a predetermined permissible limit and time for reaching the locations to generate at least one control signal. The control module controls operation of at least one re-circulation flap based on the at least one control signal for defining ratio of time of operation of the re-circulation flap in re-circulation mode to fresh air mode for ensuring that air quality inside the vehicle is within the at least one threshold limit.

In accordance with another embodiment of the present invention, the outside air pollution module includes a transceiver that transmits location and time data related to the vehicle at different locations along the selected route to a remote server and receives an estimate of air quality outside the vehicle cabin at the different locations based on a digital pollution map.

The outside air pollution module includes at least one outside embedded sensor configured outside the vehicle cabin that detects air quality, humidity, gas concentration, and temperature outside the vehicle cabin in real time.

Also, the transceiver of all the vehicles configured with the system in accordance with an embodiment of the present invention transmit determined air quality and temperature outside the vehicle cabin to the digital pollution map in order to enhance accuracy of the digital pollution map such that estimates of the air quality and temperature based on the digital pollution map are more closer to actual air quality and temperature outside the vehicle cabin.

Generally, the at least one detection module receives inputs from a passenger detection module that in turn detects number of vehicle occupants.

In accordance with an embodiment of the present invention, the at least one detection module includes at least one inside sensor that detects air quality and/or temperature and/or humidity and/or Carbon-di-oxide concentration inside the vehicle cabin in real time and /or detects at least one parameter that in turn facilitates in determining the at least one threshold limit for the air quality inside the vehicle cabin.

Generally, the at least one inside sensor is at least one of humidity, Gas sensors such as Carbon-di-oxide ($CO_2$) sensor, particulate sensor, odor sensors, temperature sensor and the likes.

Furthermore, the at least one detection module receives inputs from an air flow inlet module that determines flow rate at which fresh air enters inside the vehicle cabin based on current position of the re-circulation flap.

Generally, the processing module determines at least one of air quality parameter inside the vehicle cabin at any location along the selected route and at any time by referring to inputs from the detection module as well as the outside air quality parameters detected by at least one outside air pollution module at initialization phase and at start after a long stop, as at initialization phase and at start after a long stop, the air quality inside the vehicle cabin is assumed to be equal to the air quality outside the vehicle cabin or the air quality is detected by the inside sensor.

Specifically, the processing module refers to at least one parameter detected by at least one inside sensor, use the at least one detected parameter in a look-up table stored in the storage memory for determining the at least one threshold limit for the air quality inside the vehicle cabin.

Generally, the processing module generates at least one control signal for maintaining the re-circulation flap in the re-circulation mode for most of the time in case air quality inside the vehicle cabin at time of reaching the destination is better than the at least one threshold limit calculated based on parameter detected by the detection module at start of the travel.

In accordance with an embodiment of the present invention, the processing module generates at least one control signal for maintaining said re-circulation flap in the re-circulation mode as long as at least one of outside air quality detected by the outside embedded sensor is comparatively worse than the air quality estimated based on the digital pollution map and until air quality inside the vehicle cabin reaches a first threshold limit, the processing module generates at least one control signal to operate the re-circulation flap in the partial fresh air mode when the outside air quality detected by the outside embedded sensor is comparatively better than the air quality estimated based on the digital pollution map.

In accordance with another embodiment of the present invention, the processing module generates at least one control signal for maintaining said re-circulation flap in the re-circulation mode until air quality inside the vehicle cabin reaches a first threshold limit, the processing module generates at least one control signal to operate the re-circulation flap in the partial fresh air mode when the outside air quality detected by the outside embedded sensor is comparatively better than the air quality estimated based on the digital pollution map.

In accordance with an embodiment of the present invention, the processing module generates at least one control signal for operating the re-circulation flap in the fresh air mode in case air quality inside the vehicle cabin is comparatively worst to the air quality outside the vehicle cabin.

In accordance with an embodiment of the present invention, the processing module generates at least one control signal for operating the re-circulation flap in said at least partial fresh air mode in case air quality detected by said outside embedded sensor is comparatively better than the outside air quality estimated based on the digital pollution map.

Specifically, the processing module identifies locations along the selected routes where outside air quality is within the predetermined permissible limit and time for reaching the locations based on inputs received from at least one of the navigation module and the at least one outside air pollution module.

Further, the processing module determines the at least one threshold limit for the air quality inside the vehicle cabin and the time required to reach the threshold limit based on inputs received from at least one of the navigation module, the at least one outside air pollution module, the at least one detection module and the at least one storage memory.

Further, the control module also controls operation of at least one of an air humidity control device and an air treatment device based on the at least one control signal received from the processing module.

Generally, the humidity control device is at least one of a nebulizer and/or a dehumidification element.

Specifically, the processing module generates control signal for operating the re-circulation flap in the fresh air mode at least one of the times when the vehicle reaches corresponding locations where outside air quality is within the predetermined permissible limit but before the air quality inside the vehicle cabin reaches a first threshold limit calculated based on parameters detected by the detection module at start of travel. The processing module further generates a control signal for subsequent operation of the re-circulation flap in the fresh air mode at least one of the times when the vehicle reaches corresponding locations where outside air quality is within the predetermined permissible limit but before the air quality inside the vehicle cabin reaches a second subsequent threshold limit calculated based on parameters detected by detection module at a time the re-circulation flap last stopped operating in fresh air mode.

Further, the processing module generates control signal for stopping operation of the re-circulation flap in fresh air mode based on time for reaching subsequent threshold limit and time for reaching locations where outside air quality is within the predetermined permissible limit before the air quality inside the vehicle cabin reaches the subsequent threshold limit.

Further, the system for controlling air quality includes a display that displays information regarding at least one of section of the selected route wherein the re-circulation flap is operating in the fresh air mode and the re-circulation mode respectively, identified locations along the selected route where outside air quality is within the predetermined permissible limit and corresponding locations along the selected route at times when threshold limits are reached, wherein the information is overlapped over navigation map displayed by the navigation module.

Generally, the display is a display of the infotainment system that is already configured in the vehicle.

A method for controlling air quality inside a vehicle cabin is disclosed in accordance with an embodiment of the present invention. The method includes the steps of selecting destination and route for reaching the destination by using a navigation module, detecting air quality outside the vehicle cabin at different locations along the selected route using at least one outside air quality detection module, identifying the locations along the selected route where outside air quality is within a predetermined permissible limit, calculating time for reaching the locations based on inputs from the navigation module and the outside air quality detection module. The method further includes the steps of calculating at least one of air quality inside the vehicle cabin at any location along the selected route and at any time, at least one threshold limit for air quality inside the vehicle cabin, time required to reach the at least one threshold limit for the air quality by a processing module based on inputs from at least one of the navigation module, the at least one outside air quality detection module, a detection module and a storage module. The method further includes the step of generating at least one control signal based on calculations by the processing module and locations along the selected route where outside air quality is within the predetermined permissible limit and time required for reaching the locations. Finally, the method involves the step of controlling operation of a re-circulation flap based on the at least one control signal for defining ratio of time of operation of the re-circulation flap in re-circulation mode to fresh air mode for ensuring that air quality inside the vehicle cabin is within the at least one threshold limit.

Further, the method for controlling air quality inside a vehicle cabin includes the step of controlling operation of at least one of an air humidity control device and an air treatment device based on the at least one control signal received from the processing module.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:

FIGURE 1 illustrates a block diagram depicting various elements of a system for controlling air quality inside a vehicle cabin and interaction between the different elements thereof, wherein air quality outside the vehicle cabin is estimated based on digital pollution map;

FIGURE 2 illustrates a block diagram depicting various elements of a system for controlling air quality inside a vehicle cabin and interaction between the different elements thereof, wherein air quality outside the vehicle cabin is determined based on inputs from at least one outside embedded sensor;

FIGURE 3 illustrates a schematic representation depicting a route defined between a start point and a destination, also are depicted identified locations where outside air quality is within the predetermined permissible limit and the locations corresponding to different time required for the air quality inside the vehicle cabin to reach the different threshold limits;

FIGURE 4 illustrates a flow chart depicting various steps, checks and calculations performed for governing operation of the re-circulation flap in the fresh air mode and re-circulation mode in accordance with an embodiment of the present invention;

FIGURE 5 illustrates a flow chart depicting various steps, checks and calculations performed for governing operation of the re-circulation flap in the fresh air mode and re-circulation mode in accordance with another embodiment of the present invention; and

FIGURE 6 illustrates a flow chart depicting various steps, checks and calculations performed for governing operation of the re-circulation flap in the fresh air mode and re-circulation mode in accordance with still another embodiment of the present invention.

It must be noted that the figures disclose the invention in a detailed enough way to be implemented, said figures helping to better define the invention if needs be. The invention should however not be limited to the embodiment disclosed in the description.

The present invention envisages a system for controlling air quality inside a vehicle cabin, wherein operation of the re-circulation flap in a fresh air mode is based on time calculated for reaching a location along the selected route where outside air quality is within the predetermined permissible limit and time required to reach the at least one threshold limit for the air quality inside the vehicle cabin. More specifically, the operation of the re-circulation flap is governed not only based on air quality inside the vehicle cabin but also based on the air quality outside the vehicle. In case of the system for controlling air quality inside a vehicle cabin of the present invention, the operation of the re-circulation flap could be based on measurement of any other pollutants such as for example but not limited to, particulate matter, temperature, $CO_2$, gases, humidity. The system for controlling air quality inside the vehicle cabin of the present invention is applicable for any air conditioning system configured in any vehicle not limited to road vehicles.

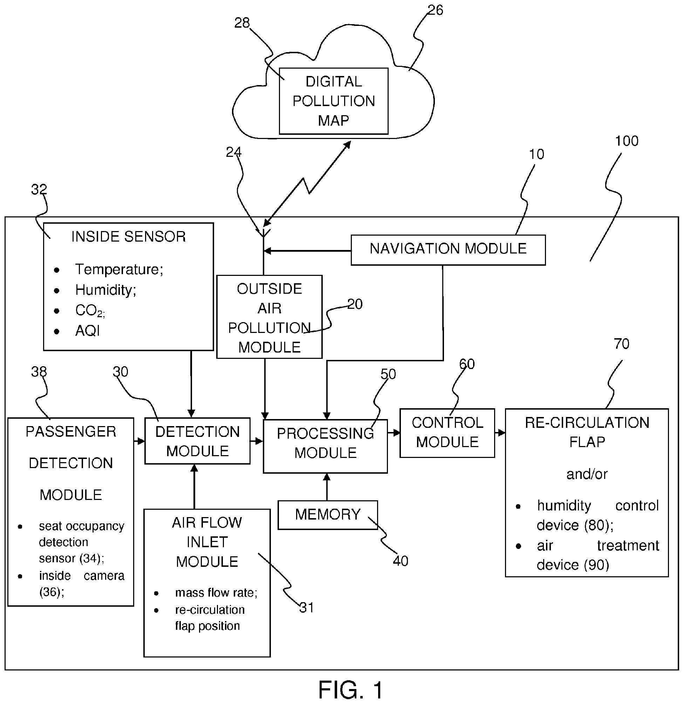

FIGURE 1 illustrates a block diagram depicting various elements of a system 100 for controlling air quality inside a vehicle cabin and interaction between the different elements in accordance with an embodiment of the present invention, wherein air quality outside the vehicle cabin is estimated based on digital pollution map. The system 100 includes a navigation module 10, also referred to as a geo-location module, at least one outside air pollution module 20, at least one detection module 30, at least one storage memory 40, a processing module 50 and a control module 60.

The navigation module 10 can either be a dedicated navigation module specifically for use in the system 100 for controlling air quality inside the vehicle cabin or can be a navigation module configured in auxiliary sub-systems of the vehicle such as the infotainment system of the vehicle. Alternatively, the navigation module 10 can be configured on any hand held or portable communication device, such as for example but not limited to laptop, smart phones and the likes that can be carried by the vehicle occupants and that can be communicably coupled to the vehicle via a communication network such as for example, but not limited to, WIFI, Bluetooth® and the likes. The navigation module 10 facilitates in selection of a destination and a route for reaching the destination. However, the present invention is not limited to any particular configuration of the navigation module 10 as far as the navigation module 10 facilitates in selection of a destination and a route for reaching the destination.

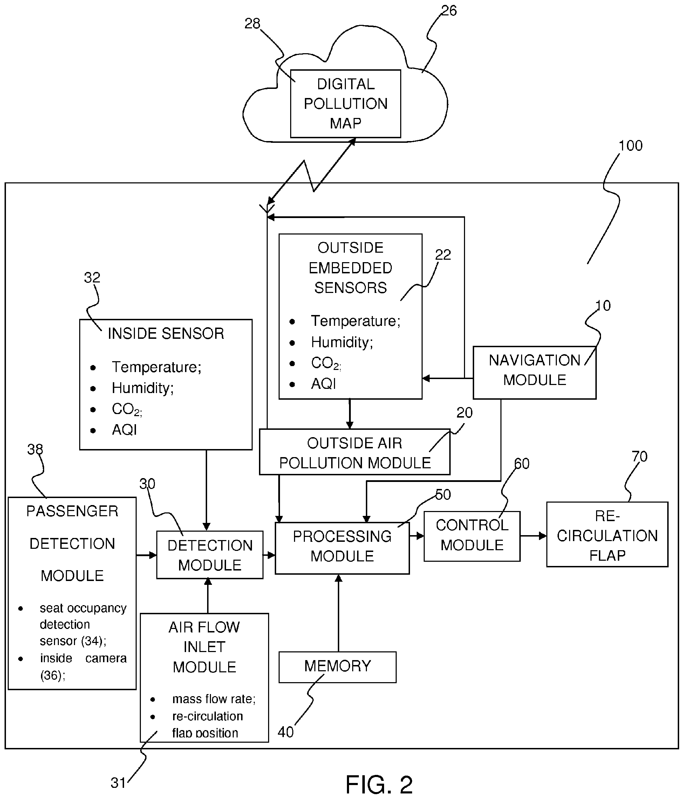

The at least one outside air pollution module 20 determines air quality outside the vehicle cabin at any location along the selected route. As illustrated in FIGURE 1 the outside air pollution module 20 includes a transceiver 24 that transmits location and time data related to the vehicle at different locations along the selected route determined by the navigation module 10 to a remote server 26 and receives an estimate of air quality outside the vehicle cabin at the different locations based on a digital pollution map **28**. The transceiver **24** can either be a dedicated transceiver specifically for use in the system **100** for controlling air quality inside the vehicle cabin or the transceiver can be a transceiver configured in any auxiliary sub-systems of the vehicle, for example, the infotainment system of the vehicle or any hand held or portable communication device, such as for example, laptop, smart phones and the likes that can be carried by the vehicle occupants and that can be communicably coupled to the vehicle via a communication network such as for example but not limited to, WIFI, Bluetooth® and the likes. As illustrated in **FIGURE 2**, the outside air pollution module **20** includes at least one outside embedded sensor **22** configured outside the vehicle cabin that detects air quality and temperature outside the vehicle cabin in real time. The at least one outside embedded sensor **22** is at least one of humidity sensor, particulate sensor, odor sensor, temperature sensor, gas sensor, Air Quality sensor and the likes. The outside air pollution determines air quality outside the vehicle cabin based on at least one of the digital pollution map **28** and the outside embedded sensor **22**. However, the present invention is not limited to any particular configuration, placement and number of the at least one outside embedded sensor **22** as far as the at least one outside embedded sensor **22** is capable of accurately detecting air quality and temperature outside the vehicle cabin in real time. Further, the transceiver **24** of all the other vehicles configured with the system **100** of the present invention transmits determined air quality and temperature outside the vehicle cabin to the digital pollution map **28** in order to enhance accuracy of the digital pollution map **28** such that estimates of the air quality and temperature based on the digital pollution map **28** are more closer to actual air quality and temperature outside the vehicle cabin. The present invention is not limited to any particular method or device or system and configuration of such method, device and system for estimating/determining air quality and temperature outside the vehicle cabin in real time.

The at least one detection module **30** detects at least one parameter impacting air quality inside the vehicle cabin. Particularly, the at least one detection module **30** receives inputs from passenger detection module **38** that in turn detects number of vehicle occupants based on inputs from at least one of CAN signal received from a sensor such as seat occupancy detection sensor **34** also referred to as seat sensor, image captured by camera **36** and the likes. Alternatively, the at least one detection module **30** receives data regarding occupants inside the vehicle cabin from the vehicle infotainment system to which the data is manually fed from the user interface of the infotainment system. However, the present invention is not limited to any particular configuration, placement and number of the occupancy detection sensor or any particular method for detecting the number of occupants inside the vehicle cabin as far as the occupancy detection sensor accurately detects the number of vehicle occupants. The at least one detection module **30** also receives inputs from an air flow inlet module **31** that determines flow rate at which fresh air enters inside the vehicle cabin based on current position of a re-circulation flap **70**. The at least one detection module **30** includes at least one inside sensor **32** that detects air quality and/or temperature and /or humidity and/or Carbon-di-oxide concentration inside the vehicle cabin in real time. The at least one inside sensor **32** is at least one of humidity, Gas sensors such as for example, Carbon-di-oxide ($CO_2$) sensor, particulate sensor, odor sensors, temperature sensor and the likes. However, the present invention is not limited to any particular configuration, the parameter detected thereby and placement and number of the at least one inside sensor **32** as far as the at least one inside sensor **32** is capable of detecting air quality and temperature inside the vehicle cabin in real time. Further, the at least one inside sensor **32** detects at least one parameter that in turn facilitates in determining the at least one threshold limit for the air quality inside the vehicle cabin. The threshold limit is defined by either one of a value, a set of values and a range of values associated with at least one parameter that is either directly determined / measured or determined by referring to a look-up table. Particularly, the processing module **50** refers to at least one parameter detected by the at least one inside sensor **32**, uses the at least one detected parameter in the look-up table stored in the at least one storage memory **40** for determining the at least one threshold limit for the air quality inside the vehicle cabin.

As the system **100** of the present invention not only considers air quality inside and outside the vehicle cabin but also considers temperature inside as well as outside the vehicle cabin for controlling operation of the re-circulation flap **70** in the fresh air mode and the re-circulation. Such configuration enables the system **100** to achieve desired air quality inside the vehicle cabin without compromising on the comfort conditions and safety inside the vehicle cabin.

The processing module **50** receives inputs from at least one of the navigation module **10**, the at least one outside air pollution module **20**, the at least one detection module **30** and the at least one storage memory **40** to determine at least one of air quality inside the vehicle cabin at any location along the selected route and at any time. The processing module calculates taking into account, at least one threshold limit for the air quality inside the vehicle under different conditions, the time required to reach the at least one threshold limit, locations along the selected routes where outside air quality is within a predetermined permissible limit and time for reaching the locations to generate at least one control signal. The predetermined permissible limit is defined by either one of a value, a set of values and a range of values associated with at least one air quality/ air pollution parameter. Based on the inputs received, the processing module **50** generates control signal for controlling operation of at least one of the re-circulation flap **70**, a humidity control device **80** and an air treatment device **90**.

The processing module **50** determines at least one of air quality parameter, such as for example Carbon-di-oxide (CO2) concentration inside the vehicle cabin at any location of the vehicle along the selected route and at any time by referring to inputs from the at least one detection module **30** as well as the outside air quality parameters detected by the at least one outside air pollution module **20** at initialization phase and at start after a long stop, as at initialization phase and at start after a long stop, the air quality inside the vehicle cabin is assumed to be equal to the air quality outside the vehicle cabin . Particularly, the processing module **50** calculates the CO2 level inside the vehicle cabin at any given time "t" based on the following formula,

$$CO2_{amount_t} = CO2_{amount_{t0}} + \frac{\text{produced CO2 flow}}{\text{Ventilation flow}} * dT$$

where,

CO2amount t is CO2 concentration inside the vehicle cabin at time t;

CO2amount t0 is CO2 concentration inside the vehicle cabin at initialization phase, i.e. at t = t0 that can be assumed equal to CO2 concentration outside the vehicle cabin at initialization phase, i.e. at t = t0, determined by the at least one outside air pollution module **20** or CO2 concentration inside the vehicle cabin at initialization phase, i.e. at t = t0 can be also measured by the inside sensor **32** embedded in the detection module **30** (if measurement of the CO2 concentration inside the vehicle cabin is done by the inside sensor **32** embedded in the detection module **30**);

*produced CO2 flow* is the CO2 produced inside the vehicle cabin, that is based on the number of occupants detected inside the vehicle cabin determined by the at least one detection module **30**, the an average CO2 emission/ passenger/min due to breathing, further metabolism characteristics based on camera may also be considered for more accurately determining the CO2 produced inside the vehicle cabin;

*ventilation flow* is CO2 amount outside and air mass flow of fresh air determined by the at least one detection module **30**; and

*dT* is the time duration t- t0

Further, the time required for reaching the threshold limit of CO2 concentration inside the vehicle cabin is also calculated by the processing module **50** based on the below formula, provided the threshold limit for the air quality inside the vehicle cabin is determined first,

$$CO2_{threshold} = CO2_{amount_{t0}} + \frac{\text{produced CO2 flow}}{\text{Ventilation flow}} * dT$$

For example, in case if as per regulations, the concentration of the CO2 inside the vehicle cabin should always be below 1000 ppm, then the CO2 threshold limit is 1000 ppm. In some cases, the threshold limit is stored in the at least one storage memory **40**. Alternatively, the processing module **50** refers to at least one parameter detected by the at least one inside sensor **32**, uses the at least one detected parameter in the look-up table stored in the at least one storage memory **40** for determining the threshold limit for the air quality inside the vehicle cabin. Also, based on the above formula, the average air mass flow of fresh air needed for maintaining the concentration of the CO2 inside the vehicle cabin within the threshold limit can also be calculated. Accordingly, the time for which the re-circulation flap **70** should operate in fresh air mode during the entire travel time can be determined as well as the ratio of the time of operation of the re-circulation flap **70** in re-circulation mode to fresh air mode for ensuring that air quality inside the vehicle cabin is within the at least one threshold limit can also be determined.

Similarly, the calculation for determining the humidity level inside the vehicle cabin at any given time "t" is based on the following formula,

$$H_2O_{amount_t} = H_2O_{amount_{t0}} + \frac{\text{produced } H_2O \text{ flow}}{\text{Ventilation flow}} * dT$$

*H2O$_{amount\ t}$* is H2O concentration inside the vehicle cabin at time t;

*H2O$_{amount\ t0}$* is H2O concentration inside the vehicle cabin at initialization phase, i.e. at t = t0 that can be assumed equal to H2O concentration or humidity outside the vehicle cabin at initialization phase, i.e. at t = t0 determined by the at least one outside air pollution module **20** or the H2O concentration inside the vehicle cabin at initialization phase, i.e. at t = t0 can also be determined by the humidity level measured by the inside sensor **32** (if humidity and temperature sensor are embedded in the detection module **30**);

*produced H2O flow* is the H2O produced inside the vehicle cabin , determined by the at least one detection module **30** based on number of occupants detected inside the vehicle cabin , the average increase in H2O concentration or humidity / passenger/min due to breathing;

*ventilation flow* is H2O amount or humidity outside and air mass flow of fresh air determined by the at least one detection module **30**; and

*dT* is the time duration t- t0

For avoiding misting on the windshield the air mass flow, target temperature blown by the air conditioning unit in comparison to the outside temperature which should be close to the windshield surface temperature are considered. Specifically, by comparison between blown air temperature and humidity and outside air temperature and humidity the ventilation flow needed to avoid misting of the windscreen can be calculated. In case the blown air temperature is lower than the outside air temperature even by increasing the amount of water in the air, there will be no issue of misting. The issue of misting arises when target temperature is higher than the outside one without demisting operating.

Based on the above calculations, the minimum of *dT* between both CO2 or H2O amount limitation for an estimated travelling time can be determined to get a ratio of recycling air over fresh air.

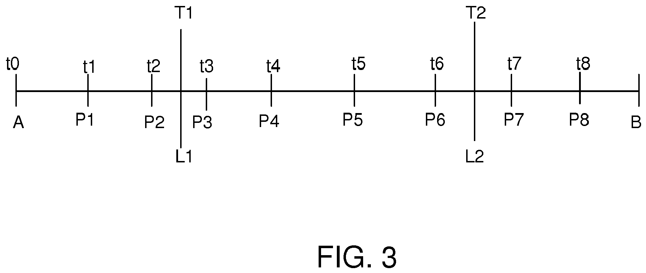

**FIGURE 3** illustrates a schematic representation depicting a route defined between a start point "A" and a destination "B", also are depicted are identified locations **P1**, **P2**, **P3**, **P4**, **P5**, **P6** where outside air quality is within the predetermined permissible limit and the locations corresponding to different time **T1** and **T2** required for the air quality inside the vehicle cabin to reach the different threshold limits **L1** and **L2**. Referring to **FIGURE 3** of the accompanying drawings, the processing module **50** generates control signal for operating the re-circulation flap **70** in the fresh air mode at least one of the times **t1**, **t2** when the vehicle reaches corresponding locations **P1**, **P2** where outside air quality is within the predetermined permissible limit but before the time **T1** at which the air quality inside the vehicle cabin reaches a first threshold limit **L1** calculated based on parameters detected by the detection module at start of travel. The processing module **50** further generates a control signal for subsequent operation of the re-circulation flap **70** in the fresh air mode at least one of the times **t3**, **t4**, **t5**, **t6** when the vehicle reaches corresponding locations **P3**, **P4**, **P5**, **P6** where outside air quality is within the predetermined permissible limit but before the time **T2** when the air quality inside the vehicle cabin reaches a second subsequent threshold limit **L2** calculated based on parameters detected by the at least one detection module **30** at a time the re-circulation flap last stopped operating in fresh air mode. Based on the above, the time duration "z" for which the re-circulation flap **70** operates in the fresh air mode is determined. Further, the processing module **50** generates control signal for stopping operation of the re-circulation flap **70** in fresh air mode based on time for reaching subsequent threshold limit and time for reaching locations where outside air quality is within the predetermined permissible limit before the air quality inside the vehicle cabin reaches the subsequent threshold limit.

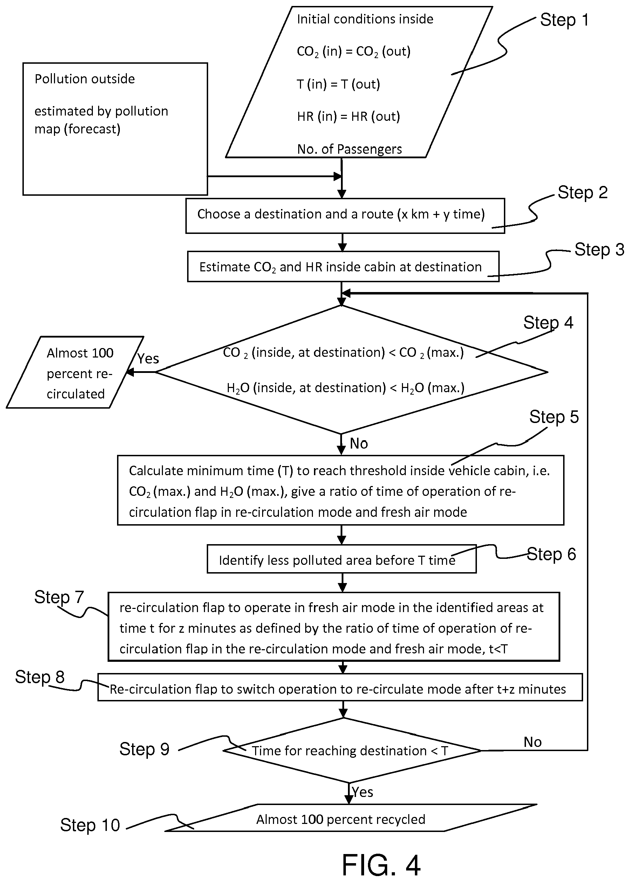

**FIGURE 4** illustrates a flow chart/ diagram depicting various steps, checks and calculations performed for governing operation of the re-circulation flap **70** in the fresh air mode and re-circulation mode in accordance with an embodiment of the present invention. Referring to **FIGURE 4**, **FIGURE 5** and **FIGURE 6**, the processing module **50** generates at least one control signal for maintaining the re-circulation flap **70** in the re-circulation mode for most of the time, particularly, the air inside the vehicle cabin is almost 100 percent re-circulated, in case air quality inside the vehicle cabin at time of reaching the destination is better than the at least one threshold limit calculated based on parameter detected by the at least one detection module **30** at start of the travel. Referring to the **FIGURE 4**, in **step 1**, the initial conditions inside the vehicle cabin , particularly, the carbon-di-oxide concentration (CO2), Temperature (T), relative humidity (HR) inside the vehicle cabin at initialization phase, i.e. at t = t0 are determined either by considering that the carbon-di-oxide concentration (CO2), Temperature (T), relative humidity (HR) inside the vehicle cabin at initialization phase i.e. at t = t0 are equal to the carbon-di-oxide concentration (CO2), Temperature (T), relative humidity (HR) outside the vehicle cabin at initialization phase i.e. at t = t0 that in turn are determined by the at least one outside air pollution module **20**. Further, the number of passengers inside the vehicle cabin is determined by the detection module **30**. Meanwhile, the user sets the destination and the route using the navigation module **10** in the **step 2**. In **step 3**, the processing module **50** determines the carbon-di-oxide concentration (CO2) and relative humidity (HR) inside the vehicle cabin at the time of reaching the destination based on the following formulae and inputs received from navigation module **10**, and detection module **30**.

$$CO2_{amount_t} = CO2_{\mathrm{amount_{t0}}} + \frac{\text{produced CO2 flow}}{\text{Ventilation flow}} * \mathrm{dT}$$

$$H_2O_{\mathrm{amount_t}} = H_2O_{\mathrm{amount_{t0}}} + \frac{\text{produced } H_2O \text{ flow}}{\text{Ventilation flow}} * \mathrm{dT}$$

Particularly, all the inputs required for determining the carbon-di-oxide concentration (CO2) and relative humidity (HR) inside the vehicle cabin at the time of reaching the destination are available, i.e. the carbon-di-oxide concentration (CO2), relative humidity (HR) inside the vehicle cabin at initialization phase i.e. at t = t0 are based on their determination in **step 1**, the produced CO2 flow, produced H2O flow is determined based on the number of passengers inside the vehicle cabin is determined by the detection module **30** in **step 1**, ventilation flow is again determined by the detection module **30** and the time dT for reaching the destination is determined by the navigation module **10**, the navigation module **10** may also refer to the real time traffic conditions based on digital traffic map stored in another remote server for determining the time dT for reaching the destination in accordance with the selected route. In **step 4**, the processing module **50** compares the carbon-di-oxide concentration (CO2) and relative humidity (HR) inside the vehicle cabin at the time of reaching the destination with threshold of the CO2 and H2O inside the vehicle cabin determined by the processing module **50** based on at least one detected parameter and the look-up table stored in the at least one storage memory **40**. The re-circulation flap **70** remains in the re-circulation mode for most of the time, particularly, the air inside the vehicle cabin is almost 100 percent re-circulated, in case air quality inside the vehicle cabin at time of reaching the destination is better than the at least one threshold limit. In step 5, the minimum time (T) to reach the threshold inside the vehicle cabin, i.e. CO2 (max.) and H2O (max.), is determined based on the following formulae,

$$CO2_{threshold} = CO2_{amount_{t0}} + \frac{produced\ CO2\ flow}{Ventilation\ flow} * dT$$

$$H_2O_{\mathrm{threshold}} = H_2O_{\mathrm{amount_{t0}}} + \frac{\text{produced } H_2O \text{ flow}}{\text{Ventilation flow}} * \mathrm{dT}$$

Further, in **step 6,** the less polluted areas, i.e. the areas where the air quality is within the predetermined permissible limit that can be reached before the minimum time (T) for reaching the threshold limit determined in the **step 5** are identified based on inputs received from at least one of the navigation module **10** and the at least one outside air pollution module **20**.

In the **step 7**, the processing module **50** generates at least one control signal for operation of the re-circulation flap **70** in the fresh air mode in the identified areas at time t, wherein t<T, for z minutes. Also, the processing module **50** generates at least one control signal for switching operation of the re-circulation flap **70** to re-circulate mode after t+z minutes as depicted in step 8. In step 9, the processing module checks if the time for reaching destination is less than the minimum time (T) to reach the threshold inside the vehicle cabin. In case the time for reaching destination is less than the minimum time (T) to reach the threshold inside the vehicle cabin, the air inside the vehicle cabin is almost 100 percent re-circulated, else cycle is repeated from step 3 onwards.

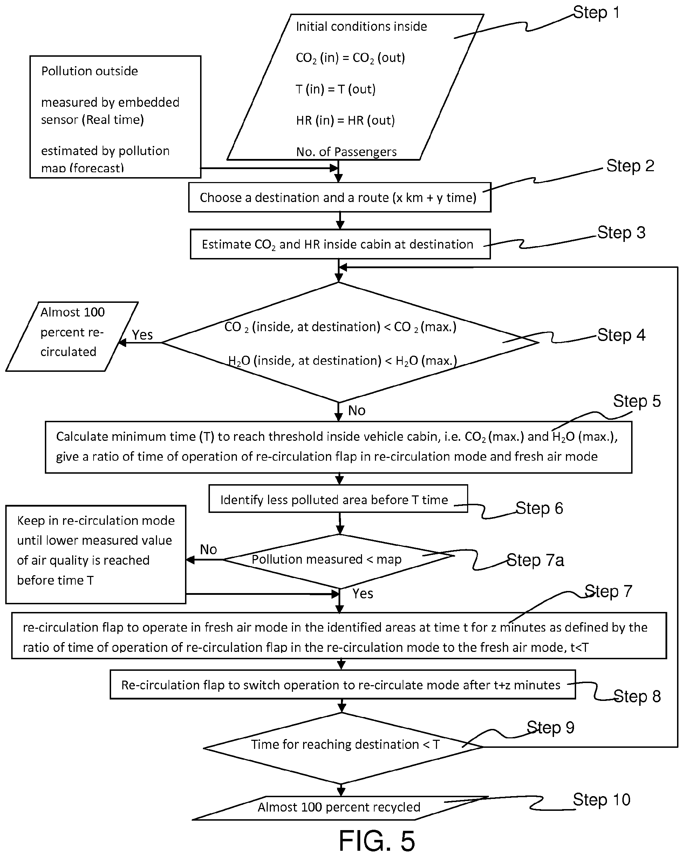

**FIGURE 5** illustrates a flow chart depicting various steps, checks and calculations performed for governing operation of the re-circulation flap **70** in the fresh air mode and re-circulation mode in accordance with another embodiment of the present invention, wherein the process for controlling the operation of the re-circulation flap **70** is having steps **1-6** that are common to the process as per the **FIGURE 4** and subsequent steps are different and for the sake of brevity of the present document, the steps 1-6 are not explained again. Referring to **FIGURE 5**, the process as per the **FIGURE 5** involves addition step **7a** wherein the processing module **50** compares the outside air quality detected by the at least one outside embedded sensor **22** with the air quality estimated based on the digital pollution map **28**, and based on the comparison, the processing module **50** generates at least one control signal for maintaining the re-circulation flap **70** in the re-circulation mode as long as at least one of outside air quality detected by the at least one outside embedded sensor **22** is comparatively worse than the air quality estimated based on the digital pollution map **28** and until air quality inside the vehicle cabin reaches a first threshold limit. Further, the processing module **50** generates at least one control signal to operate the re-circulation flap **70** in the fresh air mode when the outside air quality detected by the at least one outside embedded sensor **22** is comparatively better to the air quality estimated based on the digital pollution map **28**. The subsequent steps 7-10 are also similar to and common with the steps 7-10 of the process as per the **FIGURE 4** and for the sake of brevity of the present document, the steps 7-10 is not explained again.

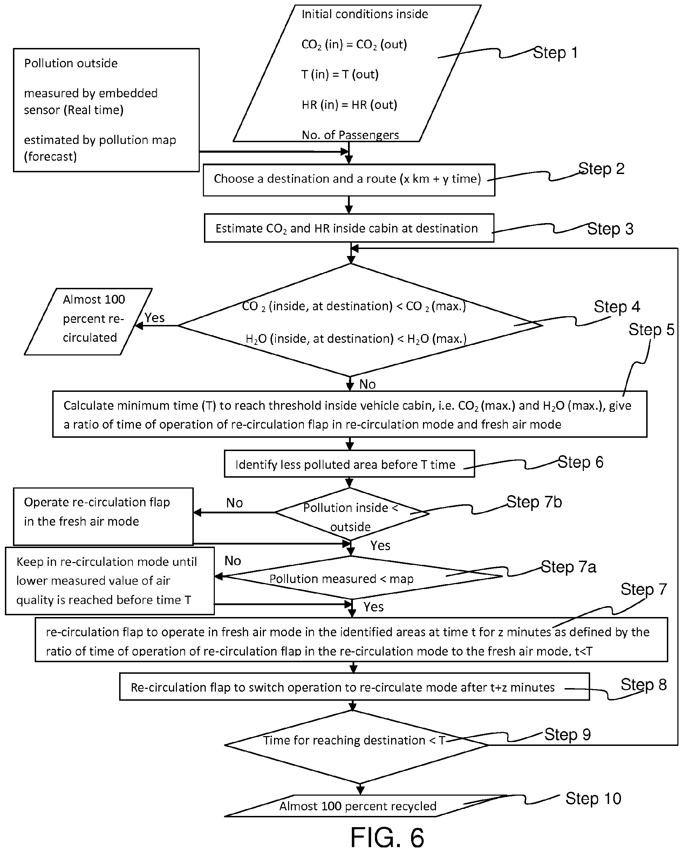

**FIGURE 6** illustrates a flow chart depicting various steps, checks and calculations performed for governing operation of the re-circulation flap **70** in the fresh air mode and re-circulation mode in accordance with still another embodiment of the present invention, wherein the process for controlling the operation of the re-circulation flap **70** is having steps **2-6** that are common to the process as per the **FIGURE 4** and **FIGURE 5** and subsequent steps are different and for the sake of brevity of the present document, the steps 1-6 are not explained again. Referring to **FIGURE 6**, the process as per the **FIGURE 6** involves addition steps wherein, in step **1**, the carbon-di-oxide concentration (CO2), Temperature (T), relative humidity (HR) inside the vehicle cabin at initialization phase, i.e. at t = t0 are determined by using inside sensor **32** embedded in the detection module **30**. In addition the process as per the **FIGURE 6** involves addition step 7b wherein the processing module **50** compares the pollution outside the vehicle cabin and the pollution inside the vehicle cabin, the processing module **50** further compares outside air quality detected by the at least one outside embedded sensor **22** with the air quality estimated based on the digital pollution map **28 in step 7a**, and based on the comparisons, the processing module **50** generates at least one control signal for operating the re-circulation flap **70** in the fresh air mode in case air quality inside the vehicle cabin is comparatively worst to the air quality outside the vehicle cabin. The processing module **50** generates at least one control signal for operating the re-circulation flap **70** in the at least partial fresh air mode in case air quality detected by the at least one outside embedded sensor **22** is comparatively better than the outside air quality estimated based on the digital pollution map **28**. The subsequent steps 7-10 are also similar to and common with the steps 7-10 of the process as per the **FIGURE 4 and FIGURE 5** and for the sake of brevity of the present document, the steps 7-10 is not explained again.

The processing module **50** identifies locations along the selected routes where outside air quality is within the predetermined permissible limit and time for reaching the locations based on inputs received from at least one of the navigation module **10** and the at least one outside air pollution module **20**. The processing module **50** determines the at least one threshold limit for the air quality inside the vehicle cabin and the time required to reach the threshold limit based on inputs received from at least one of the navigation module **10**, the at least one outside air pollution module **20**, the at least one detection module **30** and the at least one memory **40**.

The processing module **50** generates at least one control signal for controlling operation of at least one of the re-circulation flap **70** and the air humidity control device **80** based on time calculated for reaching a location along the selected route where outside air quality is within the predetermined permissible limit and time required to reach the at least one threshold limit for the air quality inside the vehicle cabin. The air humidity control device **80** can be at least one of a nebulizer and a dehumidification element. The present invention is not limited to any configuration, placement and number of the air humidity control device **80** as long as the air humidity control device **80** is capable of controlling humidity inside the vehicle cabin **20** based on the at least one control signal received from the processing module **50**.

The control module **60** controls operation of the re-circulation flap **70** based on the at least one control signal for defining ratio of time of operation of the re-circulation flap **70** in re-circulation mode to fresh air mode for ensuring that air quality inside the vehicle cabin is within the at least one threshold limit. The control module controls movement of the re-circulation air flap **70** between the fresh air mode and the **60** re-circulation mode to control fresh air intake inside the vehicle cabin based on the at least one control signal received thereby. The control module **60** also controls operation of at least one of the air humidity control device **80** to control humidity inside the vehicle cabin based on the at least one control signal received thereby. The control module **60** also controls operation of the air treatment device **90** based on the at least one control signal received from the processing module.

In accordance with an embodiment of the present invention, the air treatment device is at least one of air purifier, ionizer and fragrance diffuser. However, the present invention is not limited to any particular configuration, placement and number of the air treatment device **90**. Specifically, the control module **60** controls operation of the air purifier to purify outside air entering inside the vehicle cabin in case the re-circulation flap **70** is required to operate in the fresh air mode and the outside air entering inside the vehicle cabin is also not within the predetermined permissible limit.

The system **100** for controlling air quality further includes a display that displays information regarding at least one of section of the selected route wherein the re-circulation flap **70** is operating in the fresh air mode and the re-circulation mode respectively, identified with different color schemes, identified locations along the selected route where outside air quality is within the predetermined permissible limit and corresponding locations along the selected route at times when threshold limits are reached, wherein the information is overlapped over navigation map displayed by the navigation module **10**. Generally, the display is a display of the infotainment system that is already configured in the vehicle. Alternatively, the display is a display of any hand held or portable communication device, such as for example but not limited to laptop, smart phones and the likes that can be carried by the vehicle occupants and that can be communicably coupled to the vehicle via a communication network such as for example, WIFI, Bluetooth®.

Also, a method for controlling air quality inside a vehicle cabin is disclosed in accordance with an embodiment of the present invention. The method includes the steps of selecting destination and route for reaching the destination by using a navigation module **10**, detecting air quality outside the vehicle cabin at different locations along the selected route using at least one outside air quality detection module **20**, identifying the locations along the selected route where outside air quality is within a predetermined permissible limit, calculating time for reaching the locations based on inputs from the navigation module **10** and the outside air quality detection module **20**. The method further includes the steps of calculating at least one of air quality inside the vehicle cabin at any location along the selected route and at any time, at least one threshold limit for air quality inside the vehicle cabin , time required to reach the at least one threshold limit for the air quality by a processing module **50** based on inputs from at least one of the navigation module **10**, the at least one outside air quality detection module **20**, a detection module **30** and at least one storage module **40**. The method further includes the step of generating at least one control signal based on calculations by the processing module **50** and locations along the selected route where outside air quality is within the predetermined permissible limit and time required for reaching the locations. Finally, the method involves the step of controlling operation of a re-circulation flap **70** based on the at least one control signal for defining ratio of time of operation of the re-circulation flap **70** in re-circulation mode to fresh air mode for ensuring that air quality inside the vehicle cabin is within the at least one threshold limit. Further, the method for controlling air quality inside the vehicle cabin includes the step of controlling operation of at least one of an air humidity control device **80** and an air treatment device **90** based on the at least one control signal received from the processing module **50**.

Several modifications and improvement might be applied by the person skilled in the art to the system **100** as defined above, however, the modified system will still be within the scope and ambit of the present invention as far as the system comprises a navigation module, an outside air pollution module, a detection module, a storage memory, a processing module and a control module, wherein the processing module receives inputs from at least one of navigation module, outside air pollution module, detection module and storage memory to determine at least one of air quality inside vehicle cabin at any location along selected route and at any time, at least one threshold limit for air quality inside vehicle under different conditions, time required to reach the at least one threshold limit, locations along selected routes where outside air quality is within a predetermined permissible limit and time for reaching the locations to generate a control signal for controlling operation of a re-circulation flap and defining ratio of time of operation of the re-circulation flap in re-circulation mode and to fresh air mode.

Obviously, numerous modifications and variations of the present invention are possible in light of the above teachings. It is therefore to be understood that the invention may be practiced otherwise than as specifically described herein.

In any case, the invention cannot and should not be limited to the embodiments specifically described in this document, as other embodiments might exist. The invention shall spread to any equivalent means and any technically operating combination of means.

## Claims

1.  A system (100) for controlling air quality inside a vehicle cabin of a vehicle, said system (100) comprising:

    • a navigation module (10) adapted to facilitate selection of a destination and a route for reaching said destination;
    • at least one outside air pollution module (20) adapted to determine air quality outside the vehicle cabin ;
    • at least one detection module (30) adapted to detect at least one parameter impacting air quality inside the vehicle cabin ;
    • at least one storage memory (40);
    • a processing module (50) being adapted to receive inputs from at least one of :

       ◦ said navigation module (10),
       ◦ said at least one outside air pollution module (20),
       ◦ said at least one detection module (30) and
       ◦ said at least one storage memory (40)

    to determine air quality parameter inside the vehicle cabin at any location along said selected route and at any time,

    • said processing module (50) being adapted to calculate, taken into account at least one threshold limit for the air quality inside the vehicle cabin under different conditions, the time required to reach said at least one threshold limit,
    • said processing module (50) being adapted to determine locations along said selected routes where outside air quality is within a predetermined permissible limit and time for reaching said locations to generate at least one control signal; and
    • a control module (60) adapted to control operation of a re-circulation flap (70) based on said at least one control signal for defining ratio of time of operation of the re-circulation flap in re-circulation mode to fresh air mode for ensuring that air quality inside the vehicle cabin is within said at least one threshold limit.

2.  The system (100) for controlling air quality as claimed in the previous claim, wherein said outside air pollution module (20) comprises a transceiver (24) adapted to transmit location and time data related to the vehicle at different locations along said selected route to a remote server (26) and to receive an estimate of air quality outside the vehicle cabin at the different locations based on a digital pollution map (28).

3.  The system (100) for controlling air quality as claimed in any of the preceding claims, wherein said at least one outside air pollution module (20) comprises at least one outside embedded sensor (22) configured outside the vehicle cabin and adapted to detect air quality, humidity, gas concentration and temperature outside the vehicle cabin in real time.

4.  The system (100) for controlling air quality as claimed in any of the preceding claims, wherein said at least one detection module (30) is adapted to receive inputs from a passenger detection module (38) that in turn is adapted to detect number of vehicle occupants.

5.  The system (100) for controlling air quality as claimed in any of the preceding claims, wherein said at least one detection module (30) comprises at least one inside sensor (32) adapted to detect air quality and/or temperature and/or humidity and/or Carbon-di-oxide concentration inside the vehicle cabin in real time and/or to detect at least one parameter that in turn facilitates in determining the at least one threshold limit for the air quality inside the vehicle cabin.

6.  The system (100) for controlling air quality as claimed in any of the preceding claims, wherein said at least one detection module (30) is further adapted to receive inputs from an air flow inlet module (31) that determines flow rate at which fresh air enters inside the vehicle cabin based on current position of said re-circulation flap.

7.  The system (100) for controlling air quality as claimed in any of the preceding claims, wherein said processing module (50) is adapted to determine at least one of air quality parameter inside the vehicle cabin at any location along said selected route and at any time by referring to inputs from said at least one detection module (30) as well as the outside air quality parameters detected by said at least one outside air pollution module (20) at initialization phase and at start after a long stop, as at initialization phase and at start after a long stop, the air quality inside the vehicle cabin is assumed to be equal to the air quality outside the vehicle cabin or the air quality detected by said inside sensor (32).

8.  The system (100) for controlling air quality as claimed in any of the preceding claims, wherein said processing module (50) is adapted to refer to at least one parameter detected by said at least one inside sensor (32), to use said at least one detected parameter in a look-up table stored in said at least one storage memory (40) for determining said at least one threshold limit for the air quality inside the vehicle cabin.

9.  The system (100) for controlling air quality as claimed in any of the preceding claims, wherein said processing module (50) is adapted to generate at least one control signal for maintaining said re-circulation flap (70) in said re-circulation mode for most of the time required to reach said destination in case air quality inside the vehicle cabin estimated at time of reaching said destination is better than said at least one threshold limit calculated based on parameter detected by said at least one detection module (30) at start of said travel.

10. The system (100) for controlling air quality as claimed in any of the preceding claims, wherein said processing module (50) is adapted to generate at least one control signal for maintaining said re-circulation flap (70) in said re-circulation mode as long as at least one of outside air quality detected by said at least one outside embedded sensor (22) is comparatively worse than the air quality estimated based on said digital pollution map (28) and until air quality inside the vehicle cabin reaches a first threshold limit, said processing module further adapted to generate at least one control signal to operate said re-circulation flap (70) in at least partial fresh air mode when said outside air quality detected by said at least one outside embedded sensor (22) is comparatively better than the air quality estimated based on said digital pollution map (28).

11. The system (100) for controlling air quality as claimed in any of the preceding claims, wherein said processing module (50) is adapted to generate at least one control signal for operating said re-circulation flap (70) in said fresh air mode in case air quality inside the vehicle cabin is comparatively worst to said air quality outside the vehicle cabin .

12. The system (100) for controlling air quality as claimed in any of the preceding claims, wherein said processing module (50) is adapted to identify locations along said selected routes where outside air quality is within said predetermined permissible limit and time for reaching said locations based on inputs received from at least one of said navigation module (10) and said at least one outside air pollution module (20).

13. The system (100) for controlling air quality as claimed in any of the preceding claims, wherein said processing module (50) is adapted to determine said at least one threshold limit for the air quality inside the vehicle cabin and the time required to reach said threshold limit based on inputs received from at least one of said navigation module (10), said at least one outside air pollution module (20), said at least one detection module (30) and said at least one storage memory (40).

14. The system (100) for controlling air quality as claimed in any of the preceding claims, wherein said control module (60) is further adapted to control operation of at least one of an air humidity control device (80) and an air treatment device (90) based on said at least one control signal received from said processing module (50).

15. The system (100) for controlling air quality as claimed in any of the preceding claims, said processing module (50) is adapted to generate control signal for starting operation of said re-circulation flap (70) in said fresh air mode at least once at times (t1, t2) when said vehicle reaches corresponding locations (PI, P2) where outside air quality is within said predetermined permissible limit but before the air quality inside the vehicle cabin reaches a first threshold limit (L1) calculated based on parameters detected by said at least one detection module (30) at start of travel, said processing module (50) is further adapted to generate control signal for subsequent operation of said re-circulation flap (70) in said fresh air mode at least once at times (t3, t4, t5, t6) when said vehicle reaches corresponding locations (P3, P4, P5, P6) where outside air quality is within said predetermined permissible limit but before the air quality inside the vehicle cabin reaches a second threshold limit (L2) calculated based on parameters detected by said at least one detection module (30) at a time said re-circulation flap (70) last stopped operating in fresh air mode.

16. The system (100) for controlling air quality as claimed in any of the preceding claims, said processing module (50) is adapted to generate control signal for stopping operation of said re-circulation flap (70) in fresh air mode based on time for reaching subsequent threshold limit and time for reaching locations where outside air quality is within said predetermined permissible limit before the air quality inside the vehicle cabin reaches the subsequent threshold limit.

17. A method for controlling air quality inside a vehicle cabin , said method comprising the steps of:

• selecting destination and route for reaching said destination by using a navigation module (10);
• detecting air quality outside said vehicle cabin at different locations along said selected route using at least one outside air pollution module (20);
• identifying the locations along said selected route where outside air quality is within a predetermined permissible limit, calculating time for reaching said locations based on inputs from said navigation module (10) and said at least one outside air pollution module (20);
• calculating at least one of:

  ◦ air quality inside the vehicle cabin at any location along said selected route and at any time;
  ◦ at least one threshold limit for air quality inside said vehicle cabin ;
  ◦ time required to reach said at least one threshold limit for the air quality;

by a processing module (50) based on inputs received from at least one of said navigation module (10), said at least one outside air pollution module (20), at least one detection module (30) and a one storage memory (40);

• generating at least one control signal based on calculations by said processing module and locations along said selected route where outside air quality is within said predetermined permissible limit and time required for reaching said locations; and
• controlling operation of a re-circulation flap (70) based on said at least one control signal for defining ratio of time of operation of the re-circulation flap in re-circulation mode to fresh air mode for ensuring that air quality inside the vehicle cabin is maintained within said at least one threshold limit.

FIG. 1

FIG. 2

FIG. 3

Initial conditions inside

$CO_2$ (in) = $CO_2$ (out)

T (in) = T (out)

HR (in) = HR (out)

No. of Passengers

Step 1

Pollution outside

estimated by pollution map (forecast)

Choose a destination and a route (x km + y time) — Step 2

Estimate $CO_2$ and HR inside cabin at destination — Step 3

Step 4

Almost 100 percent re-circulated

Yes

$CO_2$ (inside, at destination) < $CO_2$ (max.)

$H_2O$ (inside, at destination) < $H_2O$ (max.)

No

Step 5

Calculate minimum time (T) to reach threshold inside vehicle cabin, i.e. $CO_2$ (max.) and $H_2O$ (max.), give a ratio of time of operation of re-circulation flap in re-circulation mode and fresh air mode

Identify less polluted area before T time — Step 6

Step 7

re-circulation flap to operate in fresh air mode in the identified areas at time t for z minutes as defined by the ratio of time of operation of re-circulation flap in the re-circulation mode and fresh air mode, t<T

Step 8

Re-circulation flap to switch operation to re-circulate mode after t+z minutes

Step 9

Time for reaching destination < T

No

Yes

Step 10

Almost 100 percent recycled

FIG. 4

Step 1

Initial conditions inside

$CO_2$ (in) = $CO_2$ (out)

T (in) = T (out)

HR (in) = HR (out)

No. of Passengers

Pollution outside

measured by embedded
sensor (Real time)

estimated by pollution
map (forecast)

Step 2

Choose a destination and a route (x km + y time)

Step 3

Estimate $CO_2$ and HR inside cabin at destination

Almost 100
percent re-
circulated

Yes

$CO_2$ (inside, at destination) < $CO_2$ (max.)

$H_2O$ (inside, at destination) < $H_2O$ (max.)

Step 4

No

Step 5

Calculate minimum time (T) to reach threshold inside vehicle cabin, i.e. $CO_2$ (max.) and $H_2O$ (max.),
give a ratio of time of operation of re-circulation flap in re-circulation mode and fresh air mode

Identify less polluted area before T time

Step 6

Keep in re-circulation mode
until lower measured value
of air quality is reached
before time T

No

Pollution measured < map

Step 7a

Yes

Step 7

re-circulation flap to operate in fresh air mode in the identified areas at time t for z minutes as defined by the
ratio of time of operation of re-circulation flap in the re-circulation mode to the fresh air mode, t<T

Re-circulation flap to switch operation to re-circulate mode after t+z minutes

Step 8

Step 9

Time for reaching destination < T

Almost 100 percent recycled

Step 10

FIG. 5

Pollution outside

measured by embedded sensor (Real time)

estimated by pollution map (forecast)

Initial conditions inside

$CO_2$ (in) = $CO_2$ (out)

T (in) = T (out)

HR (in) = HR (out)

No. of Passengers

Step 1

Choose a destination and a route (x km + y time) — Step 2

Estimate $CO_2$ and HR inside cabin at destination — Step 3

Almost 100 percent re-circulated

Yes

$CO_2$ (inside, at destination) < $CO_2$ (max.)

$H_2O$ (inside, at destination) < $H_2O$ (max.)

Step 4

Step 5

No

Calculate minimum time (T) to reach threshold inside vehicle cabin, i.e. $CO_2$ (max.) and $H_2O$ (max.), give a ratio of time of operation of re-circulation flap in re-circulation mode and fresh air mode

Identify less polluted area before T time — Step 6

Operate re-circulation flap in the fresh air mode

No

Pollution inside < outside — Step 7b

Yes

Keep in re-circulation mode until lower measured value of air quality is reached before time T

No

Pollution measured < map — Step 7a

Yes

Step 7

re-circulation flap to operate in fresh air mode in the identified areas at time t for z minutes as defined by the ratio of time of operation of re-circulation flap in the re-circulation mode to the fresh air mode, t<T

Re-circulation flap to switch operation to re-circulate mode after t+z minutes — Step 8

Time for reaching destination < T — Step 9

Almost 100 percent recycled — Step 10

FIG. 6

Europäisches
Patentamt

European
Patent Office

Office européen
des brevets

# EUROPEAN SEARCH REPORT

Application Number

EP 18 19 7003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/318368 A1 (ALGER JOSHUA A [US] ET AL) 3 November 2016 (2016-11-03) * paragraphs 0003, 0019-0027, 0030, 0048-0054, 0068-0082, 0084-0088; claims 1-11,22; figures 3-6 * ----- | 1-17 | INV. B60H1/00 G08G1/0967 |
| X | FR 3 051 147 A1 (PEUGEOT CITROEN AUTOMOBILES SA [FR]) 17 November 2017 (2017-11-17) <br><br>* page 6 - page 11; claims 1-8; figures 1-2 * ----- | 1,2,5, 7-9, 11-14, 16,17 | |
| X | DE 10 2013 220595 A1 (BOSCH GMBH ROBERT [DE]) 16 April 2015 (2015-04-16) <br><br>* paragraphs [0010], [0016] - [0020], [0031] - [0040], [0054] - [0058], [0100] - [0107]; claims 1-6; figure 1 * ----- | 1-6, 8-11,13, 16,17 | |
| A | EP 3 095 625 A1 (PEUGEOT CITROËN AUTOMOBILES SA [FR]) 23 November 2016 (2016-11-23) * paragraphs [0040] - [0048], [0051], [0054] - [0061], [0067] - [0068]; claims 1-7; figure 1 * ----- | 1-17 | TECHNICAL FIELDS SEARCHED (IPC) B60H G08G |
| A | US 2017/274737 A1 (DELARUELLE AURELIEN PIERRE CHRISTIAN [AU]) 28 September 2017 (2017-09-28) * paragraphs [0006] - [0011], [0021] - [0025], [0067] - [0069]; claims 1,8,9; figures 3-4 * ----- | 1-17 | |

The present search report has been drawn up for all claims

| Place of search | Date of completion of the search | Examiner |
|---|---|---|
| Munich | 21 March 2019 | Kristensen, Julien |

EPO FORM 1503 03.82 (P04C01)

## ANNEX TO THE EUROPEAN SEARCH REPORT
## ON EUROPEAN PATENT APPLICATION NO.

EP 18 19 7003

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2019

| Patent document cited in search report | Publication date | Patent family member(s) | Publication date |
|---|---|---|---|
| US 2016318368 A1 | 03-11-2016 | NONE | |
| FR 3051147 A1 | 17-11-2017 | NONE | |
| DE 102013220595 A1 | 16-04-2015 | CN 105593040 A<br>DE 102013220595 A1<br>WO 2015051959 A1 | 18-05-2016<br>16-04-2015<br>16-04-2015 |
| EP 3095625 A1 | 23-11-2016 | CN 106166932 A<br>EP 3095625 A1<br>FR 3036326 A1 | 30-11-2016<br>23-11-2016<br>25-11-2016 |
| US 2017274737 A1 | 28-09-2017 | CN 107234936 A<br>US 2017274737 A1 | 10-10-2017<br>28-09-2017 |

EPO FORM P0459

For more details about this annex : see Official Journal of the European Patent Office, No. 12/82